# EUROPÄISCHE PATENTANMELDUNG

(11) **EP 3 772 698 A1**
(43) Veröffentlichungstag der Anmeldung: **10.02.2021**
(21) Anmeldenummer: 20189569.5
(22) Anmeldetag: 05.08.2020
(51) Int. Cl.: G06F 21/10

(54) **SYSTEM FÜR EINEN GESTEUERTEN ZUGRIFF AUF DIGITALE MEDIENINHALTE SOWIE DATENSERVER**

(30) Priorität: 06.08.2019 DE 202019100431 U
(71) Anmelder: Tiger Media Deutschland GmbH, 20355 Hamburg (DE)
(72) Erfinder: Weitendorf, Till, 20144 Hamburg (DE)
(74) Vertreter: Lemcke, Brommer & Partner Patentanwälte Partnerschaft mbB

(57) **Zusammenfassung**

Die Erfindung betrifft ein System für einen gesteuerten Zugriff auf digitale Medieninhalte, umfassend einen Datenserver, eine Computernetz-Verbindung, ein Lese-/Ausgabegerät, einen Identifikationsträger, bei dem der Datenserver digitale Medieninhalte bereithält und bei dem das Lese-/Ausgabegerät über die Computernetz-Verbindung mit dem Datenserver verbunden oder verbindbar ist (S1) und bei dem das Lese-/Ausgabegerät ausgebildet ist, zumindest eine auf dem Identifikationsträger gespeicherte Information zu lesen (S2) sowie bei dem der Datenserver ausgebildet ist, digitale Medieninhalte an das Lese-/Ausgabegerät freizugeben. Die Freigabe von digitalen Medieninhalten erfolgt abhängig von einer Überprüfung der auf dem Identifikationsträger gespeicherten Information, wobei der Datenserver ausgebildet und eingerichtet ist, dass anhand der ausgelesenen Information des Identifikationsträgers eine Erst-Verknüpfung des Identifikationsträgers mit digitalen Medieninhalten erfolgt und eine Zweit-Verknüpfung mit digitalen Medieninhalten erfolgt (S5), sodass nach dem Abspielen (S8) der digitalen Medieninhalte durch den Benutzer, welche mit der Erst-Verknüpfung identifizierbar sind, automatisch digitalen Medieninhalte, welche mit der Zweit-Verknüpfung identifizierbar sind, abspielbar sind (S9). Die Erfindung betrifft weiter einen Datenserver.

## Beschreibung

Die Erfindung betrifft ein System für einen gesteuerten Zugriff auf digitale Medieninhalte nach dem Oberbegriff des Anspruchs 1 sowie einen Datenserver zur Speicherung, Freigabe und Verwaltung digitaler Medieninhalte nach dem Oberbegriff des Anspruchs 9.

Zum Abspielen von Medien wie Musik, Filmen oder Hörbüchern sind beispielsweise CD-Spieler, DVD-Player oder MP3-Player bekannt. Diese Geräte können speziell kindgerecht ausgestaltet sein, um die Bedingung durch Kinder zu erleichtern.

Aus dem Stand der Technik sind weitere Abspielvorrichtungen bekannt, die insbesondere Kindern einen einfachen Zugriff auf digitale Medien ermöglichen sollen. Beispielsweise ist in der DE 10 2011 056 420 A1 eine Vorrichtung beschrieben, die es erlaubt, digitale Medieninhalte mittels RFID-Technologien zu identifizieren und bereitzustellen.

Bei den bisher vorbekannten Systemen wird üblicherweise nach Verwertungsformen unterschieden, beispielsweise eine gekaufte CD mit einem CD-Player zu hören oder auf der anderen Seite beispielsweise digitale Medieninhalte zu streamen.

Insbesondere Kinder unterscheiden jedoch nicht nach verschiedenen möglichen Verwertungsformen digitaler Medieninhalte. Kauf, Leihe, Nutzung oder Eigentum haben bei Kindern in diesem Zusammenhang keine Bedeutung. Es geht allein um die Möglichkeit, die Medieninhalte zu konsumieren.

Der vorliegenden Erfindung liegt daher die Aufgabe zugrunde, ein System für einen gesteuerten Zugriff auf digitale Medieninhalte sowie einen Datenserver vorzuschlagen, die einen reibungslosen Wechsel zwischen verschiedenen Verwertungsformen erlauben.

Diese Aufgabe wird gelöst durch ein System mit den Merkmalen des Anspruchs 1. Vorteilhafte Weiterbildungen des erfindungsgemäßen Systems finden sich in den Ansprüchen 2 bis 8. Weiter gelöst wird diese Aufgabe durch einen Datenserver mit den Merkmalen des Anspruchs 9. Vorteilhafte Ausgestaltungen des erfindungsgemäßen Datenservers finden sich in den Ansprüchen 10 bis 13.

Zur Vermeidung von Wiederholungen werden diese Ansprüche hiermit explizit per Referenz in die Beschreibung aufgenommen.

Ein System für einen gesteuerten Zugriff auf digitale Medieninhalte umfasst, wie an sich bekannt, einen Datenserver, eine Computer-Netzverbindung, ein Lese-/Ausgabegerät und einen Identifikationsträger. Der Datenserver hält digitale Medieninhalte bereit und ist über die Computernetz-Verbindung mit dem Lese-/Ausgabegerät verbunden oder verbindbar. Das Lese-/Ausgabegerät ist ausgebildet, zumindest eine auf dem Identifikationsträger gespeicherte Information zu lesen. Weiter ist der Datenserver ausgebildet, digitale Medieninhalte an das Lese-/Ausgabegerät freizugeben, wobei die Freigabe von digitalen Medieninhalten abhängig von einer Überprüfung der auf dem Identifikationsträger gespeicherten Information erfolgt.

Wesentlich ist, dass der Datenserver ausgebildet und eingerichtet ist, dass anhand der ausgelesenen Informationen des Identifikationsträgers eine Erst-Verknüpfung des Identifikationsträgers mit digitalen Medieninhalten erfolgt und eine Zweit-Verknüpfung mit digitalen Medieninhalten erfolgt, sodass nach dem Abspielen der digitalen Medieninhalte durch den Benutzer, welche mit der Erst-Verknüpfung identifizierbar sind, automatisch digitale Medieninhalte, welche mit der Zweit-Verknüpfung identifizierbar sind, abspielbar sind.

Die freigegebenen digitalen Medieninhalte (im Folgenden auch genannt Titel) können an das Lese-/Ausgabegerät übertragen werden. Dabei liegt es im Rahmen der Erfindung, dass die digitalen Medieninhalte in einer Speichereinheit des Lese-/Ausgabegeräts oder einer Wiedergabevorrichtung speicherbar sind und insbesondere von einem Benutzer beliebig oft abgespielt werden können. Dabei liegt es im Rahmen der Erfindung, dass das Lese-/Ausgabegerät Teil der genannten Wiedergabevorrichtung ist.

Die digitalen Medieninhalte stellen damit ein Eigentum des Benutzers dar und der Benutzer kann die digitalen Medieninhalte beliebig oft erneut abspielen ohne beispielsweise nochmals dafür zu bezahlen. Diese Berechtigungsform ist bekannt als digitales EST-Recht.

Alternativ liegt es ebenfalls im Rahmen der Erfindung, dass die digitalen Medieninhalte nach Freigabe ohne Speicherung auf dem Lese-/Ausgabegerät oder der Wiedergabevorrichtung direkt bei der Übertragung abgespielt werden. Der Benutzer erlangt damit nicht das Eigentum an den digitalen Medieninhalten. Diese Berechtigungsform ist bekannt als Streaming. Alternativ oder zusätzlich sind weitere Berechtigungen für Verwertungsformen denkbar, beispielsweise sind auch Mischformen der bereits genannten Verwertungsformen, Leihe oder Abos-Systeme möglich.

In einer bevorzugten Ausführungsform der Erfindung ist der Datenserver ausgestaltet und eingerichtet, dass die Erst-Verknüpfung und die Zweit-Verknüpfung unterschiedliche Berechtigungen aufweisen.

Hierdurch ergibt sich der Vorteil, dass digitale Medieninhalte in unterschiedlichen Verwertungsformen bereitgestellt werden können, indem unterschiedliche Berechtigungen vergeben werden. Beispielsweise kann eine Berechtigung nur zum Streamen der digitalen Medieninhalte berechtigen, während andere Berechtigungen für die Übertragung und Speicherung auf der Wiedergabevorrichtung und damit beispielsweise zum tatsächlichen Eigentum an den digitalen Medieninhalten berechtigen.

Durch die Kombination aus zwei unterschiedlichen Berechtigungen kann beispielsweise zuerst eine Erst-Verknüpfung zu einem digitalen Medieninhalt gesetzt werden, der gekauft wurde. Damit hat diese Erst-Verknüpfung die höchstmögliche Berechtigung zur Übertragung und Speicherung auf dem Lese-/Ausgabegerät oder der Wiedergabevorrichtung. Die Zweit-Verknüpfung kann dann als Anschlussverknüpfung bei digitalen Medieninhalten gesetzt werden, die beispielsweise eine Fortsetzung der digitalen Medieninhalte mit der Erst-Verknüpfung darstellen oder in einem ähnlichen Themengebiet liegen, um den Benutzer gezielt mit weiteren Inhalten in Berührung zu bringen. Diese Zweit-Verknüpfung kann dann mit einer niedrigeren Berechtigungsstufe, beispielsweise für das Streaming, gesetzt werden.

Vorzugsweise werden auch die digitalen Medieninhalte für das Streaming in einer Mischform zumindest temporär auf dem Lese-/Ausgabegerät bzw. der Wiedergabevorrichtung gespeichert. Das Abspielen erfolgt zwar per Stream, digitalen Medieninhalte werden parallel gespeichert und können anschließend auch offline abgespielt werden. Bevorzugt geht der Besitz nicht an den Benutzer über, so dass wenn die temporäre und/oder finanzielle Berechtigung (beispielsweise in Form eines Abos oder Prepaidzeitraums) abgelaufen ist, die die digitalen Medieninhalte nicht mehr gehört werden können, auch wenn sie zuvor gespeichert wurden

Bei einer bevorzugten Weiterbildung der Erfindung ist der Datenserver ausgebildet und eingerichtet, eine Statusinformation, welche mit dem Identifikationsträger verknüpft ist, zu überprüfen und die digitalen Medieninhalte und/oder die Berechtigung, die für die Zweit-Verknüpfung zur Verfügung stehen, in Abhängigkeit von dem Ergebnis der Überprüfung einzuschränken. Die Statusinformation gibt allgemein an, für welche Verwertungsformen und/oder Themenbereiche der Benutzer berechtigt ist. Dabei kann über die Statusinformation auch die Auswahl der digitalen Medieninhalte eingeschränkt werden, beispielsweise wenn ein Benutzer lediglich ein Abo für einen bestimmten Themenbereich abgeschlossen hat. Abhängig von der Überprüfung der Statusinformation kann dann die Auswahl der Berechtigungen eingeschränkt werden, beispielsweise bei einem Abo, das lediglich Streaming ermöglichen soll, können keine Berechtigungen gesetzt werden, die eine Übertragung und Speicherung der digitalen Medieninhalte erlauben. Die Zweit-Verknüpfung kann dann also lediglich in den engen Grenzen gesetzt werden, die in Abhängigkeit von dem Ergebnis der Überprüfung der Statusinformation möglich sind.

Vorzugsweise ist die Berechtigung auf dem Datenserver in Abhängigkeit von der Statusinformation derart einrichtbar, dass anhand der Erst-Verknüpfung identifizierbare digitale Medieninhalte auf dem Lese-/Ausgabegerät speicherbar sind. Der Benutzer erlangt somit üblicherweise ein Eigentumsrecht an den digitalen Medieninhalten.

Alternativ ist die Berechtigung auf dem Datenserver in Abhängigkeit von der Statusinformation einrichtbar, dass anhand der Erst-Verknüpfung identifizierbare digitale Medieninhalte nicht auf der Wiedergabevorrichtung speicherbar sind. Die digitalen Medieninhalte sind somit ebenfalls lediglich in Form von Streaming abspielbar.

Vorzugsweise ist die Berechtigung auf dem Datenserver in Abhängigkeit von der Statusinformation einrichtbar, dass anhand der Zweit-Verknüpfung identifiziere digitale Medieninhalte nicht auf der Wiedergabevorrichtung speicherbar sind. Die Zweit-Verknüpfung berechtigt somit lediglich zum Streamen der Medieninhalte.

Vorzugsweise weist der Identifikationsträger einen NFC-Chip auf oder einen optischen Code, insbesondere bevorzugt einen NFC-Chip mit einer eindeutig zuordenbaren ID.

Bevorzugt ist der Identifikationsträger als separates Objekt, insbesondere als Karte oder Spielzeug ausgebildet. Alternativ ist der Identifikationsträger als Alltagsgegenstand, bevorzugt als Verpackung, insbesondere bevorzugt als Lebensmittelverpackung ausgebildet.

Mit einer solchen Ausgestaltung des Identifikationsträgers können Alltagsgegenstände eingesetzt werden, um Verbrauchern zusätzliche Informationen zu vermitteln, die über die Möglichkeiten einer bedruckten Verpackung hinausgehen.

Beispielsweise kann der Identifikationsträger auf einem oder in Form eines Getränkekarton oder einer Milchverpackung ausgebildet sein. Die Information des Identifikationsträgers kann mit dem Lese-/Ausgabegerät ausgelesen werden, beispielsweise kann dies per Scannen des Identifikationsträgers, bzw. eines optisch lesbaren Codes auf dem Identifikationsträger erfolgen. Daraufhin wird die ausgelesene Information des Identifikationsträgers verarbeitet und wie oben beschrieben bestimmte digitale Medieninhalte abgespielt. Diesen Titel kann der Benutzer so oft abspielen, wie er möchte.

Ausgehend von diesem ersten Titel werden dem Benutzer dann weitere digitale Medieninhalte, bevorzugt als Streaming angeboten, die beispielsweise nur einmalig abspielbar sind oder die nicht dauerhaft gespeichert werden, um das Interesse des Benutzers zu wecken.

Die vorliegende Aufgabe der Erfindung wird ebenfalls gelöst durch einen Datenserver zur Speicherung, Freigabe und Verwaltung digitaler Medieninhalte nach dem Oberbegriff des Anspruchs 9.

Wie an sich bekannt, umfasst ein solcher Datenserver zur Speicherung, Freigabe und Verwaltung digitaler Medieninhalte für eine Wiedergabevorrichtung für digitale Medieninhalte ein Datenserver, der eingerichtet und ausgebildet ist, digitale Medieninhalte an ein Lese-/ Ausgabegerät der Wiedergabevorrichtung freizugeben, wobei die Freigabe der digitalen Medieninhalte abhängig von einer Überprüfung von einer durch die Wiedergabevorrichtung übermittelten Information erfolgt.

Wesentlich ist, dass der Datenserver ausgebildet und eingerichtet ist, dass anhand der ausgelesenen Information des Identifikationsträgers eine Erst-Verknüpfung des Identifikationsträgers mit digitalen Medieninhalten erfolgt und eine Zweit-Verknüpfung mit digitalen Medieninhalten erfolgt, so dass nach dem Abspielen der digitalen Medieninhalte durch den Benutzer, welche mit der Erst-Verknüpfung identifizierbar sind, automatisch digitale Medieninhalte, welche mit der Zweit-Verknüpfung identifizierbar sind, abspielbar sind.

Der erfindungsgemäße Datenserver weißt ebenfalls die vorgenannten Vorurteile des erfindungsgemäßen Systems bzw. der bevorzugten Ausführungsformen des erfindungsgemäßen Systems auf.

In einer bevorzugten Weiterbildung der Erfindung ist der Datenserver ausgestaltet und eingerichtet, dass die Erst-Verknüpfung und die Zweit-Verknüpfung unterschiedliche Berechtigungen aufweisen.

Durch die Auswahlmöglichkeit aus unterschiedlichen Berechtigungen bzw. Berechtigungsstufen auf dem Datenserver kann beispielsweise zuerst eine Erst-Verknüpfung zu einem digitalen Medieninhalt gesetzt werden, der gekauft wurde. Damit hat diese Erst-Verknüpfung die höchstmögliche Berechtigung zur Übertragung und Speicherung auf dem Lese-/Ausgabegerät oder der Wiedergabevorrichtung. Die Zweit-Verknüpfung kann dann als Anschlussverknüpfung bei digitalen Medieninhalten gesetzt werden, die beispielsweise eine Fortsetzung der digitalen Medieninhalte mit der Erst-Verknüpfung darstellen oder in einem ähnlichen Themengebiet liegen, um den Benutzer gezielt mit weiteren Inhalten in Berührung zu bringen. Diese Zweit-Verknüpfung kann dann mit einer niedrigeren Berechtigungsstufe, beispielsweise für das Streaming, gesetzt werden.

In einer weiteren Ausführungsform der Erfindung ist der Datenserver ausgebildet und eingerichtet, eine Statusinformation, welche mit dem Identifikationsträger verknüpft ist, zu überprüfen und die digitalen Medieninhalte und/oder die Berechtigung, die für die Zweit-Verknüpfung zur Verfügung stehen, in Abhängigkeit von dem Ergebnis der Überprüfung einzuschränken.

Die Statusinformation gibt allgemein an, für welche Verwertungsformen und/oder Themenbereiche der Benutzer berechtigt ist. Dabei kann über die Statusinformation auch die Auswahl der digitalen Medieninhalte auf dem Datenserver eingeschränkt werden, beispielsweise wenn ein Benutzer lediglich ein Abo für einen bestimmten Themenbereich abgeschlossen hat. Abhängig von der Überprüfung der Statusinformation kann dann die Auswahl der Berechtigungen eingeschränkt werden, beispielsweise bei einem Abo, das lediglich Streaming ermöglichen soll, können keine Berechtigungen gesetzt werden, die eine Übertragung und Speicherung der digitalen Medieninhalte erlauben. Besitzt ein Benutzer kein Abo, kann beispielsweise keine Berechtigung für die Zweitverknüpfung vergeben werden. Alternativ können Kurzzeit-Berechtigungen für Ausschnitt weiterer interessanter digitaler Medieninhalte vergeben werden, um dem Benutzer Auszüge zum Weiterhören und ggf. Abschließen eines Abos zur Verfügung zu stellen.

Die Zweit-Verknüpfung kann dann also lediglich in den engen Grenzen gesetzt werden, die in Abhängigkeit von dem Ergebnis der Überprüfung der Statusinformation möglich sind.

Über das erfindungsgemäße System bzw. den erfindungsgemäßen Datenserver können somit vorteilhafterweise unterschiedliche Verwertungsformen bereitgestellt werden. Vorzugsweise können verschiedene Medieninhalte mit bspw. einer ersten Berechtigung, die nur zum Streamen berechtigt zur Verfügung gestellt werden, während andere Medieninhalte mit einer zweiten Berechtigung, die für die Übertragung und tatsächliches Eigentum an den Inhalten berechtigt zur Verfügung gestellt werden können. Bspw. kann ein Benutzer einen Identifikationsträger, üblicherweise in der Form einer Karte, kaufen. Dieser Identifikationsträger, diese Karte, berechtigt zum Eigentum an einer ersten Folge einer Serie digitaler Medieninhalte. Wird der Identifikationsträger in Verbindung mit dem Lese-/Ausgabegerät gebracht, d.h. vorliegend die Karte in eine Wiedergabevorrichtung mit Lese-/Ausgabegerät gesteckt, wird die erste Folge der Serie digitaler Medieninhalte abgespielt. Im Anschluss wird automatisch die darauffolgende Folge der Serie digitaler Medieninhalte abgespielt. An dieser Folge wird jedoch kein Eigentum erworben, die Folge wird hingegen lediglich gestreamt. Ob die Folge abgespielt wird oder nicht, wird anhand der Statusinformation geprüft, ob der Benutzer bspw. in Form eines Abos die Berechtigung für das Streaming weiterer Inhalte erworben hat.

Weitere vorteilhafte Ausführungsformen der Erfindung ergeben sich aus den nachstehend beschriebenen Ausführungsbeispielen, welche anhand von einer Zeichnung beschrieben werden. Dabei zeigt:

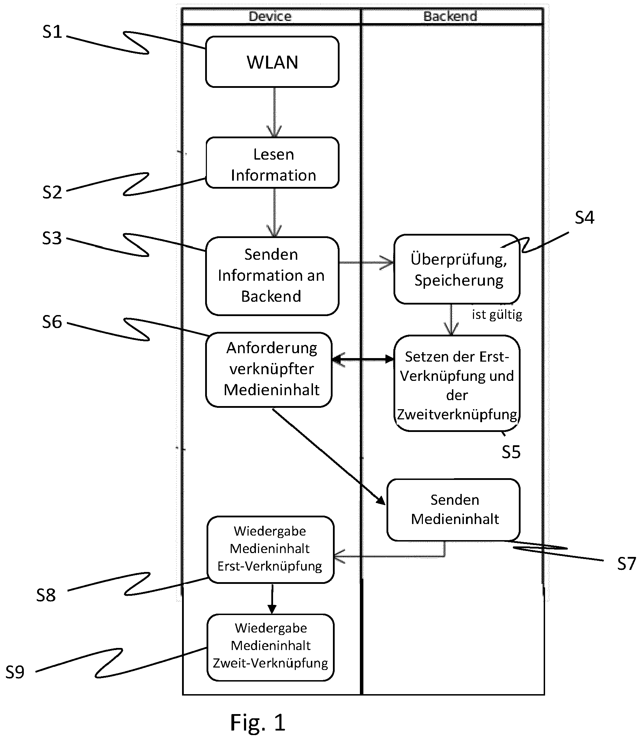

- Fig. 1: ein Ablaufdiagramm eines in dem erfindungsgemäßen System ablaufendes Verfahren für die Steuerung des Zugriffs auf digitale Medieninhalte.

Das Lese-/Ausgabegerät ist in Schritt S1 über das Internet oder einem vergleichbaren Computernetz (sog. WLAN Onboarding) mit dem Datenserver (Backend) verbunden.

In Schritt S2 wird die auf dem Identifikationsträger gespeicherte Information, vorliegend Code-Daten auf der NFC Karte (Identifikationsträger), mittels des Lese-/Ausgabegeräts gelesen. Vorliegend wird dazu der Identifikationsträger in Form einer Karte in die Wiedergabevorrichtung mit dem Lese-/Ausgabegerät gesteckt. Dazu werden vorliegend die Code-Daten ausgelesen. Der Identifikationsträger weist mit der auf dem Identifikationsträger gespeicherte Information, eine Identifikationsmöglichkeit auf, mit der jeder einzelne Identifikationsträger eindeutig identifiziert werden kann.

Diese Information wird im Backend gespeichert und wird beim erstmaligen Aktivieren des Identifikationsträgers in der Wiedergabevorrichtung mit dem Lese-/Ausgabegerät an das Backend übermittelt S3. Durch diese Übermittlung S3 wird ein eindeutig identifizierbarer Identifikationsträger mit einem Benutzerkonto auf dem Datenserver verknüpft, indem die auf dem Identifikationsträger gespeicherte Information auf dem Datenserver überprüft und gespeichert wird S4.

Dabei wird in Schritt S5 in Form der Erst-Verknüpfung die Information des Identifikationsträgers auf dem Datenserver mit einem Titel (digitale Medieninhalte) verknüpft. Die digitalen Medieninhalte werden durch den Identifikationsträger bestimmt und hängen davon ab, welche Titel der Benutzer in Form des Identifikationsträgers gekauft hat.

Zusätzlich wird eine Zweit-Verknüpfung der Information des Identifikationsträgers mit digitalen Medieninhalten gesetzt. Diese Zweit-Verknüpfung kann unabhängig von dem Identifikationsträger gesetzt werden. Hier kann der Anbieter wählen, welche digitalen Medieninhalte er dem Benutzer zur Verfügung stellen möchte. Dies kann bei mehrteiligen digitalen Medieninhalten bspw. eine Fortsetzung des digitalen Medieninhalts der Erst-Verknüpfung sein. Denkbar sind jedoch ebenfalls Werbung, Zusatzinformationen oder beliebige andere Inhalte.

Die Zweit-Verknüpfung wird in Abhängigkeit von dem Ergebnis der Überprüfung einer Statusinformation gesetzt, welche mit dem Identifikationsträger verknüpft ist. Dabei kann die Berechtigung für die Zweit-Verknüpfung in Abhängigkeit von dem Ergebnis der Überprüfung einer Statusinformation gesetzt werden.

Soll nun die Wiedergabe durch den Bediener gestartet werden, wird der Identifikationsträger in Wechselwirkung mit dem Lese-/Ausgabegerät gebracht. Vorliegend wird dazu der Identifikationsträger in Form einer Karte in die Wiedergabevorrichtung mit dem Lese-/Ausgabegerät gesteckt. Dies kann sowohl gleichzeitig mit Schritt S2 als auch zu einem späteren Zeitpunkt erfolgen.

Beim Starten der Wiedergabe durch den Bediener werden die digitalen Medieninhalte, die mit der Erst-Verknüpfung verknüpft sind, angefordert S6. In Schritt S7 liefert das Backend diese Mediendaten an das Lese-/Ausgabegerät. Die für dieses Lese-/Ausgabegerät bestimmten Medieninhalte werden in Schritt S8 abgespielt.

Im Anschluss wird in Schritt S9 nach dem Abspielen der digitalen Medieninhalte durch den Benutzer, welche mit der Erst-Verknüpfung identifizierbar sind, automatisch digitale Medieninhalte, welche mit der Zweit-Verknüpfung identifizierbar sind, auf der Wiedergabevorrichtung abgespielt. Dazu können gleichzeitig oder zeitversetzt analog zu den Schritten S6 und S7 die digitalen Medieninhalte, die mit der Zweit-Verknüpfung verknüpft sind, angefordert und übertragen werden.

Über das erfindungsgemäße System können somit vorteilhafterweise unterschiedliche Verwertungsformen bereitgestellt werden. Das bedeutet, dass verschiedene Medieninhalte mit bspw. einer ersten Berechtigung, die nur zum Streamen berechtigt zur Verfügung gestellt werden, während andere Medieninhalte mit einer zweiten Berechtigung, die für die Übertragung und tatsächliches Eigentum an den Inhalten berechtigt zur Verfügung gestellt werden können. Bspw. kann ein Benutzer einen Identifikationsträger, üblicherweise in der Form einer Karte, kaufen. Dieser Identifikationsträger, diese Karte, berechtigt zum Eigentum an einer ersten Folge einer Serie digitaler Medieninhalte. Wird der Identifikationsträger in Verbindung mit dem Lese-/Ausgabegerät gebracht, d.h. vorliegend die Karte in eine Wiedergabevorrichtung mit Lese-/Ausgabegerät gesteckt, wird die erste Folge der Serie digitaler Medieninhalte abgespielt. Im Anschluss wird automatisch die darauffolgende Folge der Serie digitaler Medieninhalte abgespielt. An dieser Folge wird jedoch kein Eigentum erworben, die Folge wird hingegen lediglich gestreamt. Ob die Folge abgespielt wird oder nicht, wird anhand der Statusinformation geprüft, ob der Benutzer bspw. in Form eines Abos die Berechtigung für das Streaming weiterer Inhalte erworben hat.

## Patentansprüche

1. System für einen gesteuerten Zugriff auf digitale Medieninhalte, umfassend:
einen Datenserver;
eine Computernetz-Verbindung;
ein Lese-/Ausgabegerät;
einen Identifikationsträger;
bei dem der Datenserver digitale Medieninhalte bereithält;
bei dem das Lese-/Ausgabegerät über die Computernetz-Verbindung mit dem Datenserver verbunden oder verbindbar ist (S1);
bei dem das Lese-/Ausgabegerät ausgebildet ist, zumindest eine auf dem Identifikationsträger gespeicherte Information zu lesen (S2),
bei dem der Datenserver ausgebildet ist, digitale Medieninhalte an das Lese-/Ausgabegerät freizugeben, wobei die Freigabe von digitalen Medieninhalten abhängig von einer Überprüfung der auf dem Identifikationsträger gespeicherten Information erfolgt,
**dadurch gekennzeichnet,**
**dass** der Datenserver ausgebildet und eingerichtet ist, dass anhand der ausgelesenen Information des Identifikationsträgers eine Erst-Verknüpfung des Identifikationsträgers mit digitalen Medieninhalten erfolgt und eine Zweit-Verknüpfung mit digitalen Medieninhalten erfolgt (S5), sodass nach dem Abspielen (S8) der digitalen Medieninhalte durch den Benutzer, welche mit der Erst-Verknüpfung identifizierbar sind, automatisch digitalen Medieninhalte,
welche mit der Zweit-Verknüpfung identifizierbar sind, abspielbar sind (S9).

2. System nach Anspruch 1,
**dadurch gekennzeichnet,**
**dass** der Datenserver ausgestaltet und eingerichtet ist, dass die Erst-Verknüpfung und die Zweit-Verknüpfung unterschiedliche Berechtigungen aufweisen.

3. System nach einem der vorangegangenen Ansprüche,
**dadurch gekennzeichnet,**
**dass** der Datenserver ausgebildet und eingerichtet ist, eine Statusinformation, welche mit dem Identifikationsträger verknüpft ist, zu überprüfen und die digitalen Medieninhalte und/oder die Berechtigung, die für die Zweit-Verknüpfung zur Verfügung stehen, in Abhängigkeit von dem Ergebnis der Überprüfung einzuschränken.

4. System nach einem der vorangegangenen Ansprüche,
**dadurch gekennzeichnet,**
**dass** die Berechtigung auf dem Datenserver in Abhängigkeit von der Statusinformation einrichtbar ist, dass anhand der Erst-Verknüpfung identifizierbaren digitale Medieninhalten auf dem Lese-/Ausgabegerät speicherbar sind.

5. System nach einem der vorangegangenen Ansprüche,
**dadurch gekennzeichnet,**
**dass** die Berechtigung auf dem Datenserver in Abhängigkeit von der Statusinformation einrichtbar ist, dass anhand der Zweit-Verknüpfung identifizierbaren digitalen Medieninhalten nicht auf dem Lese-/Ausgabegerät speicherbar sind.

6. System nach einem der vorangegangenen Ansprüche,
**dadurch gekennzeichnet,**
**dass** der Identifikationsträger einen NFC-Chip aufweist, insbesondere bevorzugt, dass der Identifikationsträger einen NFC-Chip mit einer eindeutig zuordenbaren ID aufweist.

7. System nach einem der vorangegangenen Ansprüche,
**dadurch gekennzeichnet,**
**dass** der Identifikationsträger als separates Objekt, insbesondere als Karte oder Spielzeug ausgebildet ist.

8. System nach einem der vorangegangenen Ansprüche,
**dadurch gekennzeichnet,**
**dass** der Identifikationsträger als Alltagsgegenstand, bevorzugt als Verpackung, insbesondere bevorzugt als Lebensmittelverpackung ausgebildet ist.

9. Datenserver zur Speicherung, Freigabe und Verwaltung digitaler Medieninhalte für eine Wiedergabevorrichtung für digitale Medieninhalte, welcher Datenserver ausgebildet ist, digitale Medieninhalte an ein Lese-/Ausgabegerät der Wiedergabevorrichtung freizugeben, wobei die Freigabe der digitalen Medieninhalte abhängig von einer Überprüfung von einer durch die Wiedergabevorrichtung übermittelten Information erfolgt,
**dadurch gekennzeichnet,**
**dass** der Datenserver ausgebildet und eingerichtet ist, dass anhand der ausgelesenen Information des Identifikationsträgers eine Erst-Verknüpfung des Identifikationsträgers mit digitalen Medieninhalten erfolgt und eine Zweit-Verknüpfung mit digitalen Medieninhalten erfolgt (S5), sodass nach dem Abspielen (S8) der digitalen Medieninhalte durch den Benutzer, welche mit der Erst-Verknüpfung identifizierbar sind, automatisch digitale Medieninhalte, welche mit der Zweit-Verknüpfung identifizierbar sind, abspielbar sind (S9).

10. Datenserver nach Anspruch 9,
**dadurch gekennzeichnet,**
**dass** der Datenserver ausgestaltet und eingerichtet ist, dass die Erst-Verknüpfung und die Zweit-Verknüpfung unterschiedliche Berechtigungen aufweisen.

11. Datenserver nach Anspruch 9 oder 10,
**dadurch gekennzeichnet,**
**dass** der Datenserver ausgebildet und eingerichtet ist, eine Statusinformation, welche mit dem Identifikationsträger verknüpft ist, zu überprüfen und die digitalen Medieninhalte und/oder die Berechtigung, die für die Zweit-Verknüpfung zur Verfügung stehen, in Abhängigkeit von dem Ergebnis der Überprüfung einzuschränken.

12. Datenserver nach einem der Ansprüche 9 bis 11,
**dadurch gekennzeichnet,**
**dass** die Berechtigung auf dem Datenserver in Abhängigkeit von der Statusinformation einrichtbar ist, dass anhand der Erst-Verknüpfung identifizierbaren digitale Medieninhalten auf dem Lese-/Ausgabegerät speicherbar sind.

13. Datenserver nach einem der Ansprüche 9 bis 12,
**dadurch gekennzeichnet,**
**dass** die Berechtigung auf dem Datenserver in Abhängigkeit von der Statusinformation einrichtbar ist, dass anhand der Zweit-Verknüpfung identifizierbaren digitalen Medieninhalten nicht auf dem Lese-/Ausgabegerät speicherbar sind.
